# EUROPEAN PATENT APPLICATION

(11) **EP 3 643 520 A1**
(43) Date of publication of application: **29.04.2020**
(21) Application number: 18820219.6
(22) Date of filing: 07.06.2018
(51) Int. Cl.: B60C 9/20, B60C 9/22

(54) **PNEUMATIC TIRE**

(30) Priority: 19.06.2017 JP 2017119894
(71) Applicant: Bridgestone Corporation, Tokyo 104-8340 (JP)
(72) Inventor: HASEGAWA, Keiichi, Tokyo 104-8340 (JP); ARIMA, Masayuki, Tokyo 104-8340 (JP)
(74) Representative: Oxley, Robin John George
(86) International application number: PCT/JP2018/021886
(87) International publication number: WO 2018/235624

(57) **Abstract**

A pneumatic tire of the present disclosure comprises a resin-coated belt comprising a wire coated with a coating resin, a base ring that comes in contact with a tire widthwise outer end of the resin-coated belt is provided on a tire radial inside of the resin-coated belt, the base ring has a tire widthwise outer end located on an outer side of the tire widthwise outer end of the resin-coated belt in a tire width direction, and the pneumatic tire further comprises an auxiliary belt that covers a tire radial outside of the base ring in a tire widthwise region from the tire widthwise outer end of the resin-coated belt to at least a part of a tire widthwise outside, and that covers a tire radial outside of the resin-coated belt in a tire widthwise region from the tire widthwise outer end of the resin-coated belt to at least a part of a tire widthwise inside.

## Description

### TECHNICAL FIELD

The present disclosure relates to a pneumatic tire.

### BACKGROUND

Heretofore, in a pneumatic tire, a belt has been usually disposed on an outer side of a carcass in a tire radial direction to exert a hoop effect of fastening the carcass and to heighten a rigidity of a tread (e.g., Patent Literature 1).

In recent years, demand for weight reduction of a tire has risen, and it has therefore been suggested that a wire coated with a coating resin is used as a belt. By use of such a resin-coated belt, the above function of the belt can be exerted while achieving the weight reduction, because the resin has a high rigidity for its weight.

### CITATION LIST

### Patent Literature

PTL 1: Japanese Patent Laid-Open No. 1998-035220

### SUMMARY

### (Technical Problem)

In a case where a resin-coated belt is used in a pneumatic tire, however, a sharp and large difference in level of rigidity occurs in a tire width direction with a tire widthwise end of the resin-coated belt as a boundary, due to a high rigidity of the resin-coated belt. Consequently, an end portion of the resin-coated belt is easily noticeably strained. It has been desired that occurrence of a failure in the end portion of the resin-coated belt due to the strain is inhibited.

Therefore, it is an object of the present disclosure to provide a pneumatic tire that is capable of inhibiting occurrence of a failure in an end portion of a resin-coated belt.

### (Solution to Problem)

A gist configuration of the present disclosure is as follows.

A pneumatic tire of the present disclosure comprises a resin-coated belt comprising a wire coated with a coating resin,
wherein a base ring that comes in contact with a tire widthwise outer end of the resin-coated belt is provided on a tire radial inside of the resin-coated belt,
the base ring has a tire widthwise outer end located on an outer side of the tire widthwise outer end of the resin-coated belt in a tire width direction,
the pneumatic tire further comprising an auxiliary belt that covers a tire radial outside of the base ring in a tire widthwise region from the tire widthwise outer end of the resin-coated belt to at least a part of a tire widthwise outside, and that covers a tire radial outside of the resin-coated belt in the tire widthwise region from the tire widthwise outer end of the resin-coated belt to at least a part of a tire widthwise inside.

### (Advantageous Effect)

According to the present disclosure, there can be provided a pneumatic tire that is capable of inhibiting occurrence of a failure in an end portion of a resin-coated belt.

### BRIEF DESCRIPTION OF THE DRAWINGS

In the accompanying drawings:
FIG. 1 is a schematic partially cross-sectional view in a tire width direction, illustrating a tire widthwise half portion of a pneumatic tire according to an embodiment of the present disclosure;
FIG. 2A is a partially cross-sectional view illustrating another example of arrangement of an auxiliary belt together with a part of a base ring and a resin-coated belt;
FIG. 2B is a partially cross-sectional view illustrating still another example of the arrangement of the auxiliary belt together with a part of the base ring and the resin-coated belt;
FIG. 2C is a partially cross-sectional view illustrating a further example of the arrangement of the auxiliary belt together with a part of the base ring and the resin-coated belt;
FIG. 2D is a partially cross-sectional view illustrating a still further example of the arrangement of the auxiliary belt together with a part of the base ring and the resin-coated belt;
FIG. 3 is a schematic partially cross-sectional view in a tire width direction, illustrating a part of a tire widthwise half portion of a pneumatic tire according to another embodiment of the present disclosure;
FIG. 4A is a partially cross-sectional view illustrating another example of a cross-sectional shape of the resin-coated belt together with a part of a base ring and a resin-coated belt;
FIG. 4B is a partially cross-sectional view illustrating still another example of the cross-sectional shape of the resin-coated belt together with a part of the base ring and the resin-coated belt;
FIG. 4C is a partially cross-sectional view illustrating a further example of the cross-sectional shape of the resin-coated belt together with a part of the base ring and the resin-coated belt; and
FIG. 4D is a partially cross-sectional view illustrating a still further example of the cross-sectional shape of the resin-coated belt together with a part of the base ring and the resin-coated belt.

### DETAILED DESCRIPTION

Hereinafter, embodiments of the present disclosure will be illustrated and described in detail with reference to the drawings.

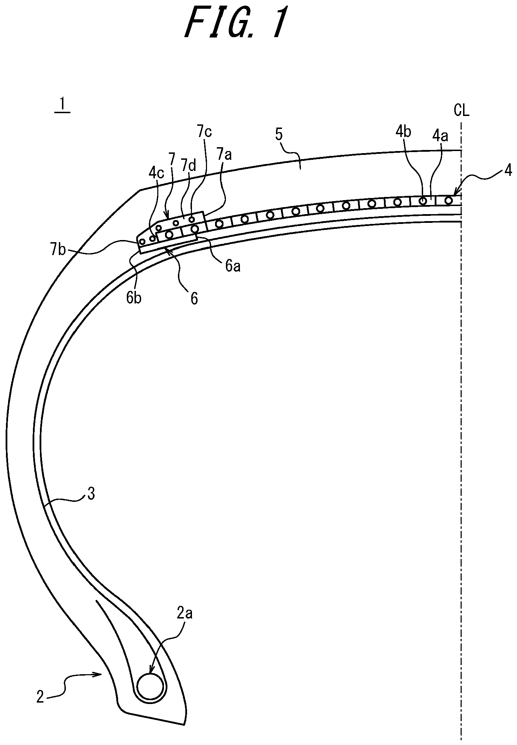

FIG. 1 is a schematic partially cross-sectional view in a tire width direction, illustrating a tire widthwise half portion of a pneumatic tire according to an embodiment of the present disclosure. FIG. 1 only illustrates one tire widthwise half portion with a tire equatorial plane CL as a boundary, and omits depiction of the other half portion. The other half portion also has a similar configuration. A pneumatic tire 1 (hereinafter also referred to simply as the tire) of the present embodiment comprises a resin-coated belt 4 comprising a wire 4b coated with a coating resin 4a, and a tread 5 in order on an outer side of a crown portion of a carcass 3 that toroidally straddles a bead core 2a embedded in a pair of bead portions 2 in a tire radial direction.

In the present disclosure, there are not any special restrictions on a belt structure, and a tire structure other than configurations of an after-mentioned base ring and an auxiliary belt, and the structure can be configured using a usual rubber according to the convention.

For example, in the present embodiment, the structure includes the bead core 2a formed by bundling steel wires, but there are not any special restrictions on a material and a shape of the bead core. Alternatively, the structure does not have to include the bead core 2a. Furthermore, in the present embodiment, the carcass 3 is formed with a carcass ply made of organic fibers, and there are not any special restrictions on a material or number of carcass plies.

In the present embodiment, the resin-coated belt 4 is a spiral belt formed by spirally winding, about a tire axis, a resin-coated wire formed by coating the wire 4b with the coating resin 4a. In the present disclosure, it is preferable that the resin-coated belt 4 comprises one layer. A resin containing a wire has a high rigidity, and hence, a tread rigidity can be sufficiently heightened with the one layer, which is also preferable from a viewpoint of weight reduction. The resin-coated belt 4 can have a tire widthwise width that is, for example, from 90 to 120% of a tire ground contact width.

In the wire 4b, an arbitrary known material can be used, and, for example, a steel cord can be used. The steel cord can be formed of, for example, a steel monofilament or a stranded wire. Furthermore, in the wire 4b, the organic fibers, carbon fibers or the like may be used.

Additionally, in the coating resin 4a, for example, a thermoplastic elastomer or a thermoplastic resin can be used, and a resin that crosslinks by heat or an electron beam or a resin that cures by thermal dislocation can be used. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, a resin can be used in which, for example, a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation (JIS K7113) similarly prescribed in JIS K7113 is 50% or more, and Vicat softening temperature (A-method) prescribed in JIS K7206 is 130°C or more. It is preferable that the coating resin 4a that coats the wire 4b has a tensile elastic modulus (prescribed in JIS K7113: 1995) of 50 MPa or more. Furthermore, it is preferable that the tensile elastic modulus of the coating resin 4a that coats the wire 4b is 1000 MPa or less. Note that the coating resin 4a mentioned herein does not contain a rubber (an organic polymer material that exhibits a rubber elasticity at normal temperature).

The spiral belt can be formed, for example, by coating an outer peripheral side of the wire 4b with the molten coating resin 4a, cooling and solidifying the resin to form the resin-coated wire, and welding and bonding, to each other, the resin-coated wires adjacent in an axial direction of an annular material formed by winding the resin-coated wire while melting the coating resin 4a by hot plate welding or the like. Alternatively, the spiral belt may be formed by bonding and joining, to each other, the resin-coated wires adjacent in the axial direction of the formed annular material with an adhesive or the like.

As illustrated in FIG. 1, in the tire 1 of the present embodiment, a base ring 6 that comes in contact with a tire widthwise outer end 4c of the resin-coated belt 4 (at least a part of the ring is located at the same position as a position of the tire widthwise outer end 4c of the resin-coated belt 4 in the tire width direction and comes in contact with the end) is provided on a tire radial inside of the resin-coated belt 4. In this example, the base ring 6 is an annular member made of a resin (in this example, the member extends continuously in a tire circumferential direction). As the resin, the same resin as the coating resin 4a of the resin-coated belt 4 may be used, or a different resin may be used. Also in a case where the resin of the base ring 6 is different from the coating resin 4a of the resin-coated belt 4, the above illustrated thermoplastic elastomer or thermoplastic resin can be used as a material of the coating resin 4a.

As illustrated in FIG. 1, in this example, a tire widthwise inner end 6a of the base ring 6 is located on an inner side of the tire widthwise outer end 4c of the resin-coated belt 4 in the tire width direction, and a tire widthwise outer end 6b of the base ring 6 is located on an outer side of the tire widthwise outer end 4c of the resin-coated belt 4 in the tire width direction. In the present disclosure, it is preferable that a width of the base ring 6 in the tire width direction is 7% or more of a width of the resin-coated belt 4 in the tire width direction. When the percentage is 7% or more, the resin-coated belt 4 can be easily disposed during manufacturing (especially in a case where the spiral belt is wound). Furthermore, it is preferable that a central position of the base ring 6 in the tire width direction is a position of the tire widthwise outer end 4c of the resin-coated belt 4 or a tire widthwise position near the outer end. During the manufacturing, the resin-coated belt 4 can be easily disposed (especially in the case where the spiral belt is wound). Furthermore, the after-mentioned base ring 6 can securely exert an effect of decreasing a difference in level of rigidity between the resin-coated belt 4 and the rubber. A thickness of the base ring 6 can be from 0.5 to 2 mm, and a tire widthwise distance from the tire widthwise outer end 4c of the resin-coated belt 4 to each of the tire widthwise inner end and outer end of the base ring 6 can be 0 mm or more. Note that a size mentioned herein is measured in a state where the tire is installed to an applicable rim and charged with a prescribed internal pressure and no load (provided that "the tire ground contact width" is a tire widthwise distance between ground contact ends in a state where the tire is installed to the applicable rim, and charged with the prescribed internal pressure and no load, the ground contact end being a tire widthwise outermost position of a contact patch in a state where the tire is installed to an applicable rim and charged with the prescribed internal pressure and a maximum load). In the present description, "the applicable rim" indicates an approved rim (a measuring rim in Standards Manual of ETRTO, and a design rim in Year Book of TRA) in an applicable size described or to be described in future in an industrial standard valid in a district where the tire is produced and used, for example, JATMA Year Book of JATMA (the Japan Automobile Tyre Manufacturers Association) in Japan, Standards Manual of ETRTO (the European Tyre and Rim Technical Organisation) in Europe, or Year Book of TRA (the Tire and Rim Association, Inc.) in U.S. (That is, the above rim also includes a size that can be included in the above industrial standard in future, in addition to the existing size. Examples of "the size to be described in future" can include sizes described as "future developments" in 2013 edition of Standards Manual of ETRTO.) However, it is considered that a rim having a size that is not described in the above industrial standard is a rim having a width corresponding to a bead width of the tire. Additionally, "the prescribed internal pressure" indicates an air pressure (a maximum air pressure) corresponding to a tire maximum load capability of a standard such as JATMA described above in the tire of the applicable size. Note that in case of a size that is not described in the above industrial standard, "the prescribed internal pressure" is an air pressure (the maximum air pressure) corresponding to the maximum load capability prescribed for each vehicle to which the tire is installed. "The maximum load" means a load corresponding to the tire maximum load capability of the standard such as JATMA described above in the tire of the applicable size, or the maximum load capability prescribed for each vehicle to which the tire is installed in a case where the load has a size that is not described in the above industrial standard.

Here, the tire of the present embodiment further comprises an auxiliary belt 7 that covers a tire radial outside of the base ring 6 in a tire widthwise region from the tire widthwise outer end 4c of the resin-coated belt 4 to at least a part of the tire widthwise outside, and that covers a tire radial outside of the resin-coated belt 4 in a tire widthwise region from the tire widthwise outer end 4c of the resin-coated belt 4 to at least a part of a tire width direction inside.

In the illustrated example, a tire widthwise inner end 7a of the auxiliary belt 7 is located on an inner side of the tire widthwise inner end 6a of the base ring 6 in the tire width direction. The auxiliary belt 7 covers the tire radial outside of the resin-coated belt 4 in the tire widthwise region from the tire widthwise outer end 4c of the resin-coated belt 4 to at least the tire widthwise inner end 6a of the base ring 6. The auxiliary belt 7 has a tire widthwise outer end 7b located at about the same position as a position of the tire widthwise outer end 6b of the base ring 6 in the tire width direction. The auxiliary belt 7 covers the tire radial outside of the base ring 6 in the tire widthwise region from the tire widthwise outer end 4c of the resin-coated belt 4 to the tire widthwise outer end 6b of the base ring 6.

In the present embodiment, the auxiliary belt 7 comprises the resin-coated wire formed by coating a wire 7c with a coating resin 7d. As the coating resin 7d, the same resin as the coating resin 4a of the resin-coated belt 4 may be used, or a different resin may be used. For example, the auxiliary belt 7 can be formed by injection molding of the wire 7c with the coating resin 7d. In this case, one or a combination of a wire having a diameter smaller than a diameter of a wire of the resin-coated belt 4, a thin covering gauge, and a low elastic-modulus resin may be used.

Hereinafter, description will be made as to operations and effects of the pneumatic tire of the present embodiment. Note that in the present embodiment, the resin-coated belt 4 comprises a steel wire coated with the coating resin 4a, and has a rigidity higher than a rigidity of the base ring 6 comprising the resin (that does not include the wire). Furthermore, the auxiliary belt 7 has a rigidity lower than the rigidity of the resin-coated belt 4 and higher than the rigidity of the base ring.

According to the pneumatic tire of the present embodiment, first, the base ring 6 that comes in contact with the tire widthwise outer end 4c of the resin-coated belt 4 is provided on the tire radial inside of the resin-coated belt 4. Consequently, the difference in level of rigidity with the tire widthwise outer end 4c of the resin-coated belt 4 as a boundary can be decreased as in the case where a shape and large difference in level of rigidity occurs between the resin-coated belt 4 and the rubber in the tire width direction (a case where the base ring 6 is not provided). On the other hand, only with such a configuration, rubber strain occurs near the tire widthwise outer end 6b of the base ring 6, thereby causing a possibility of a failure.

On the other hand, in the present embodiment, the tire further comprises the auxiliary belt 7 that covers the tire radial outside of the base ring 6 in the tire widthwise region from the tire widthwise outer end 4c of the resin-coated belt 4 to at least a part of the tire widthwise outside, and that covers the tire radial outside of the resin-coated belt 4 in the tire widthwise region from the tire widthwise outer end 4c of the resin-coated belt 4 to at least a part of the tire widthwise inside. Consequently, the rubber strain near the tire widthwise outer end 6b of the base ring 6 can be inhibited, and such a failure can be inhibited.

As described above, according to the present embodiment, the occurrence of the failure in an end portion of the resin-coated belt 4 can be inhibited. Furthermore, a failure such as separation of the tire widthwise outer end 6b of the base ring 6 from the rubber can be inhibited.

Furthermore, in the present embodiment, the auxiliary belt 7 covers the tire radial outside of the resin-coated belt 4 in the tire widthwise region from the tire widthwise outer end 4c of the resin-coated belt 4 to at least the part of the tire widthwise inside. Consequently, for example, air entry near the tire widthwise outer end 4c of the resin-coated belt 4 in a manufacturing process can be inhibited.

In the present disclosure, it is preferable that the base ring 6 including the tire widthwise inner end 6a is provided in each tire widthwise half portion with the tire equatorial plane CL as a boundary as in the embodiment illustrated in FIG. 1. The base ring 6 includes a hollow structure, and hence, weight reduction of the tire can be achieved. On the other hand, in the present disclosure, the base ring 6 extends continuously in the tire width direction between both tire widthwise ends.

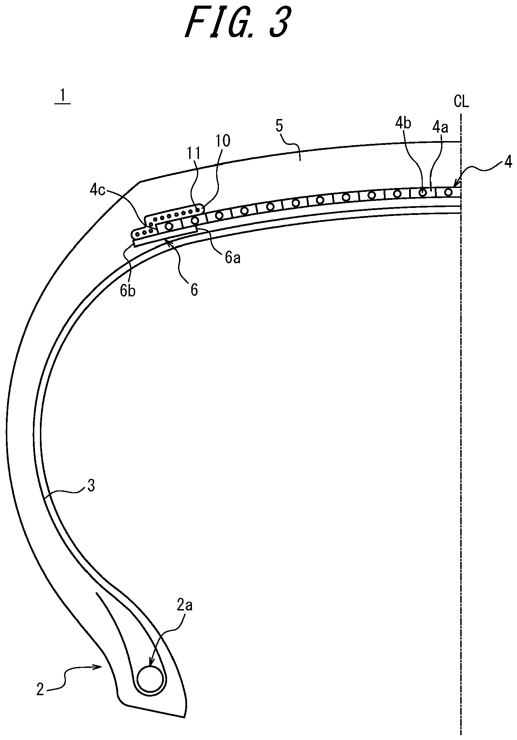

Furthermore, in the present disclosure, it is preferable that the auxiliary belt 7 comprises a resin-coated wire formed by coating the wire 7c with the coating resin 7d as in the above embodiment. This is because the rigidity of the auxiliary belt 7 can be acquired, the effect of inhibiting the rubber strain near the tire widthwise outer end 6b of the base ring 6 can be secured, and occurrence of, for example, separation near such a position can be further inhibited. FIG. 3 is a schematic partially cross-sectional view in a tire width direction, illustrating a part of a tire widthwise half portion of a pneumatic tire according to another embodiment of the present disclosure. As illustrated in FIG. 3, in the present disclosure, a rubber-coated wire formed by coating a wire 11 (organic fibers or the like) with a coating rubber 10 may form an auxiliary belt 7.

Additionally, in the present disclosure, a resin-coated belt 4 can be a spiral belt formed by spirally winding a resin-coated wire formed by coating a wire 4b with a coating resin 4a as in the above embodiment. The reason is that the resin-coated belt 4 can be formed in a simple manner.

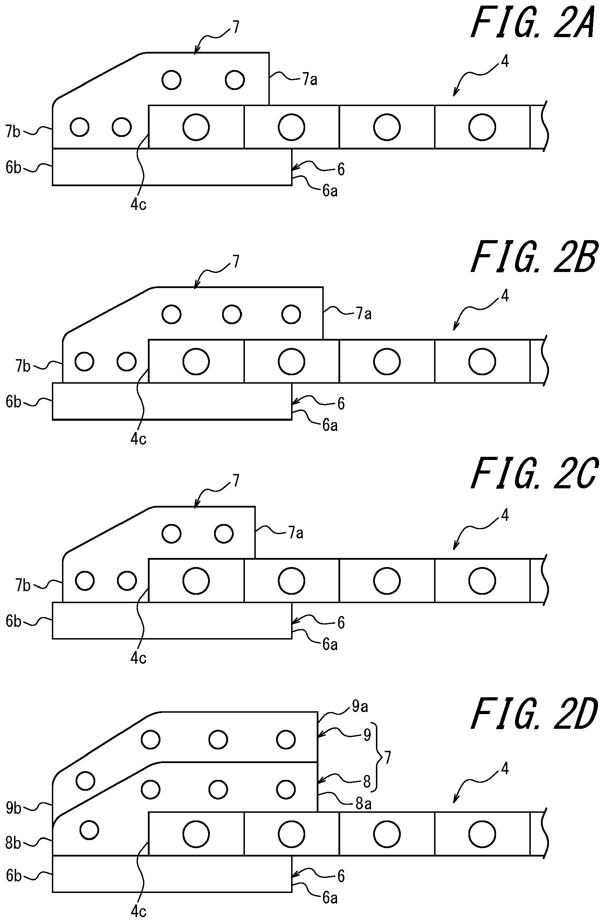

FIG. 2A to FIG. 2C are partially cross-sectional views each illustrating another example of arrangement of the auxiliary belt 7 together with a part of the base ring 6 and resin-coated belt 4.

In the example illustrated in FIG. 2A, the tire widthwise inner end 7a of the auxiliary belt 7 is located on an outer side of the tire widthwise inner end 6a of the base ring 6 in the tire width direction, and the tire widthwise outer end 7b of the auxiliary belt 7 is located at about the same position as a position of the tire widthwise outer end 6b of the base ring 6 in the tire width direction. In the example illustrated in FIG. 2B, the tire widthwise inner end 7a of the auxiliary belt 7 is located on an inner side of the tire widthwise inner end 6a of the base ring 6 in the tire width direction, and the tire widthwise outer end 7b of the auxiliary belt 7 is located on an inner side of the tire widthwise outer end 6b of the base ring 6 in the tire width direction. In the example illustrated in FIG. 2C, the tire widthwise inner end 7a of the auxiliary belt 7 is located on an outer side of the tire widthwise inner end 6a of the base ring 6 in the tire width direction, and the tire widthwise outer end 7b of the auxiliary belt 7 is located on an inner side of the tire widthwise outer end 6b of the base ring 6 in the tire width direction.

Furthermore, in the example illustrated in FIG. 2D, the auxiliary belt 7 comprises two auxiliary belt layers 8 and 9, and the auxiliary belt layer 9 is layered on a tire radial outside of the auxiliary belt layer 8. In the illustrated example, each of the auxiliary belt layers 8 and 9 is a wire (e.g., organic fibers) coated with a coating resin (or a coating rubber). In the illustrated example, a tire widthwise inner end 8a of the auxiliary belt layer 8 and a tire widthwise inner end 9a of the auxiliary belt layer 9 are located at about the same position in the tire width direction. Each end is located on an inner side of the tire widthwise inner end 6a of the base ring 6 in the tire width direction. Furthermore, a tire widthwise outer end 8b of the auxiliary belt layer 8 and a tire widthwise outer end 9b of the auxiliary belt layer 9 are located at about the same position as a position of the tire widthwise outer end 6b of the base ring 6 in the tire width direction. Thus, the auxiliary belt may comprise a plurality of layers.

In each of the examples illustrated in FIG. 2A to FIG. 2D, the auxiliary belt 7 covers the tire radial outside of the base ring 6 in the tire widthwise region from the tire widthwise outer end 4c of the resin-coated belt 4 to at least a part of the tire widthwise outside, and covers the tire radial outside of the resin-coated belt 4 in the tire widthwise region from the tire widthwise outer end 4c of the resin-coated belt 4 to at least a part of a tire widthwise inside. Consequently, operations and effects similar to those of the embodiment illustrated in FIG. 1 can be exerted. Note that as in the example illustrated in FIG. 2D, in a case where the auxiliary belt comprises a plurality of layers, an innermost layer in a tire radial direction may cover a tire radial outside of the base ring 6 in a tire width region from the tire widthwise outer end 4c of the resin-coated belt 4 to at least a part of the tire widthwise outside, and may cover a tire radial outside of the resin-coated belt 4 in a tire widthwise region from the tire widthwise outer end 4c of the resin-coated belt 4 to at least a part of a tire widthwise inside.

As above, the embodiments of the present disclosure are described, but the present disclosure is not limited to the above embodiments. For example, in the examples illustrated in FIG. 1 and FIGS. 2A to 2D, the base ring 6 has a shape having an almost constant thickness, but the thickness may vary. In particular, it is preferable that a portion of the base ring 6 on a tire widthwise inner side of the tire widthwise outer end 4c of the resin-coated belt 4 has a rigidity that decreases from a tire widthwise outer side toward the tire widthwise inner side. For example, it is preferable that the portion is formed as a tapered portion having a thickness that gradually decreases from the tire widthwise outer side toward the tire widthwise inner side. Furthermore, in particular, it is preferable that a portion of the base ring 6 on a tire widthwise outer side of the tire widthwise outer end 4c of the resin-coated belt 4 has a rigidity that decreases from the tire widthwise inner side toward the tire widthwise outer side. For example, it is preferable that the portion is formed as a tapered portion having a thickness that gradually decreases from the tire widthwise inner side toward the tire widthwise outer side. This is because the difference in level of rigidity between the base ring 6 and the rubber can be decreased.

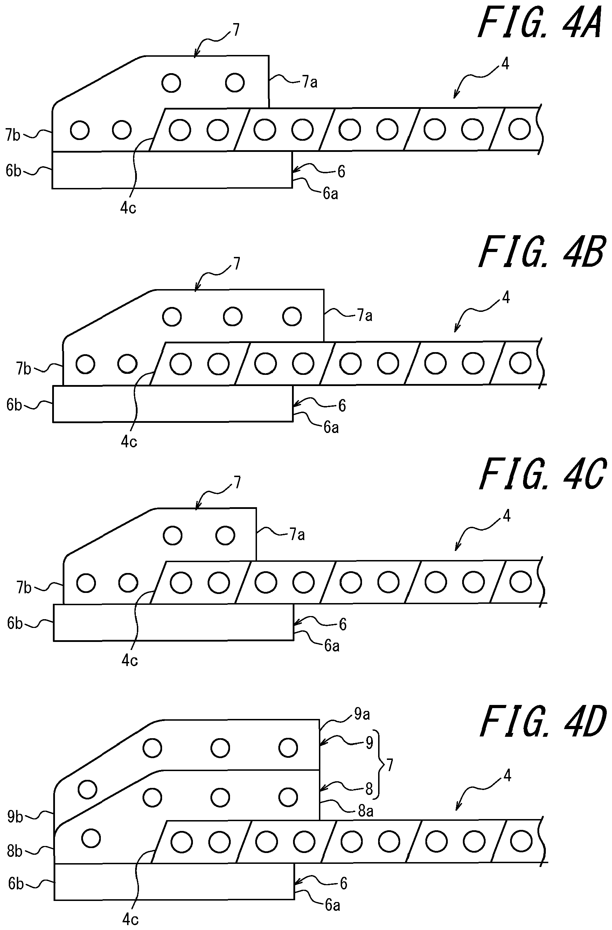

FIG. 4A to FIG. 4D are partially cross-sectional views each illustrating another example of a cross-sectional shape of the resin-coated belt together with a part of the base ring and resin-coated belt. In each of the examples illustrated in FIG. 4A to FIG. 4D, the resin-coated belt 4 has a parallelogram cross section. Thus, the resin-coated belt can have various cross-sectional shapes.

### REFERENCE SIGNS LIST

- 1: pneumatic tire
- 2: bead portion
- 2a: bead core
- 3: carcass
- 4: resin-coated belt
- 4a: coating resin
- 4b: wire
- 4c: tire widthwise outer end of the resin-coated belt
- 5: tread
- 6: base ring
- 6a: tire widthwise inner end of the base ring
- 6b: tire widthwise outer end of the base ring
- 7: auxiliary belt
- 7a: tire widthwise inner end of the auxiliary belt
- 7b: tire widthwise outer end of the auxiliary belt
- 7c: wire of the auxiliary belt
- 7d: coating resin of the auxiliary belt
- 8: auxiliary belt layer
- 9: auxiliary belt layer
- 10: coating rubber
- 11: wire
- CL: tire equatorial plane

## Claims

1. A pneumatic tire comprising a resin-coated belt comprising a wire coated with a coating resin, wherein a base ring that comes in contact with a tire widthwise outer end of the resin-coated belt is provided on a tire radial inside of the resin-coated belt,
the base ring has a tire widthwise outer end located on an outer side of the tire widthwise outer end of the resin-coated belt in a tire width direction,
the pneumatic tire further comprising an auxiliary belt that covers a tire radial outside of the base ring in a tire widthwise region from the tire widthwise outer end of the resin-coated belt to at least a part of a tire widthwise outside, and that covers a tire radial outside of the resin-coated belt in the tire widthwise region from the tire widthwise outer end of the resin-coated belt to at least a part of a tire widthwise inside.

2. The pneumatic tire according to claim 1, wherein the base ring including the tire widthwise inner end is provided in each tire widthwise half portion with a tire equatorial plane as a boundary.

3. The pneumatic tire according to claim 1 or 2, wherein the auxiliary belt comprises a resin-coated wire formed by coating a wire with a coating resin.

4. The pneumatic tire according to any one of claims 1 to 3, wherein the resin-coated belt is a spiral belt formed by spirally winding the resin-coated wire formed by coating the wire with the coating resin.
